# EUROPEAN PATENT APPLICATION

(11) **EP 2 624 113 A1**
(43) Date of publication of application: **07.08.2013**
(21) Application number: 12153277.4
(22) Date of filing: 31.01.2012
(51) Int. Cl.: G06F 3/048, H04N 5/44

(54) **Apparatus and method of facilitating input at a second electronic device**

(71) Applicant: Research In Motion Limited, Waterloo, ON N2L 3W8 (CA)
(72) Inventor: Walker, David Ryan, Waterloo, Ontario N2L 3W8 (CA); Pasquero, Jerome, Waterloo, Ontario N2L 3W8 (CA)
(74) Representative: Moore, Barry

(57) **Abstract**

A method includes: receiving, at a processor of a first electronic device, an input indicating an object is proximate to an input device of the first electronic device; determining, at the processor, a location of the object relative to the input device; and sending data for displaying a visual representation of the object relative to the input device at an output device of a second electronic device.

## Description

### TECHNICAL FIELD

The present application relates to apparatus and methods for facilitating input at a second electronic device using a first input device.

### BACKGROUND DISCUSSION

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

### SUMMARY

In an aspect of the present disclosure there is provided a method including: receiving, at a processor of a first electronic device, an input indicating an object is proximate to an input device of the first electronic device; determining, at the processor, a location of the object relative to the input device; and sending data for displaying a visual representation of the object relative to the input device at an output device of a second electronic device.

In another aspect of the present disclosure there is provided a first electronic device including: an input device; a sensor for detecting an object proximate to the input device; and a processor in electrical communication with the input device and the sensor, the processor receiving an input indicating that an object is proximate to the input device from the sensor, determining a location of the object relative to the input device and sending data for displaying a visual representation of the object relative to the input device at an output device of a second electronic device

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present application will now be described, by way of example only, with reference to the attached Figures, wherein:

FIG. 1 is a simplified block diagram of components including internal components of a portable electronic device;

FIG. 2 is a simplified block diagram of a first electronic device in communication with an output device of a second electronic device;

FIG. 3 is a flowchart illustrating an example of a method of facilitating input at an electronic device in accordance with the present disclosure;

FIG. 4 is a schematic diagram depicting operation of a step of the example method of FIG. 3; and

FIG. 5 is another schematic diagram depicting operation of a step of the example method of FIG. 3.

### DETAILED DESCRIPTION

The following describes an apparatus for and method of facilitating input at an electronic device. A visual representation of an input device of a first electronic device is displayed on an output device of a second electronic device. The visual representation includes object location indicators to facilitate data entry when the user is not looking at the input device.

For simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The disclosure generally relates to an electronic device, which is a portable electronic device in the embodiments described herein. Examples of portable electronic devices include mobile, or handheld, wireless communication devices such as cellular phones, cellular smart-phones, wireless organizers, personal digital assistants, wirelessly enabled notebook computers, and so forth.

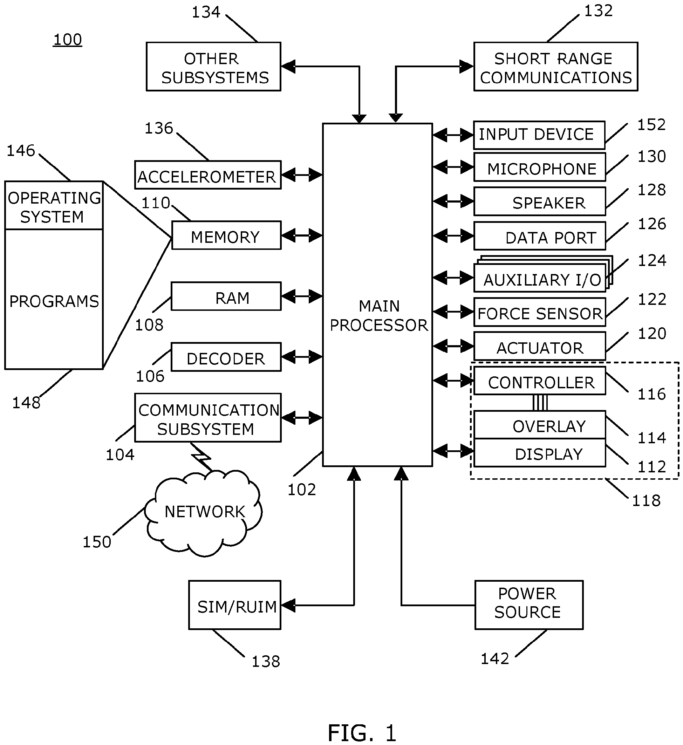

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with an input device 152, which may be a keyboard, keypad, one or more buttons, a track pad, or a touch-sensitive display, for example. The input device 152 may include one or more sensors for detecting a proximate object, which may be within a threshold distance of the input device 152 or may be in contact with the input device 152. The object may be a finger, thumb, appendage, or a stylus, pen, or other pointer, for example. The processor 102 may determine attributes of the proximate object, including a location. Multiple simultaneous proximate objects may be detected.

The processor 102 also interacts with other components, such as Random Access Memory (RAM) 108, memory 110, a display 118, an auxiliary input/output (I/O) subsystem 124, a data port 126, a speaker 128, a microphone 130, short-range communications 132, and other device subsystems 134. The processor 102 may interact with an orientation sensor such as an accelerometer 136 that may be utilized to detect direction of gravitational forces or gravity-induced reaction forces.

The display 118 may be a non-touch-sensitive display, such as an LCD, for example, or a touch-sensitive display. In FIG. 1, a display component 112 and a touch-sensitive overlay 114 operably connected to an electronic controller 116 together comprise a touch-sensitive display 118. The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The processor 102 may optionally interact with one or more actuators 120 to provide tactile feedback and one or more force sensors 122 to detect a force imparted on the touch-sensitive display 118. Interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

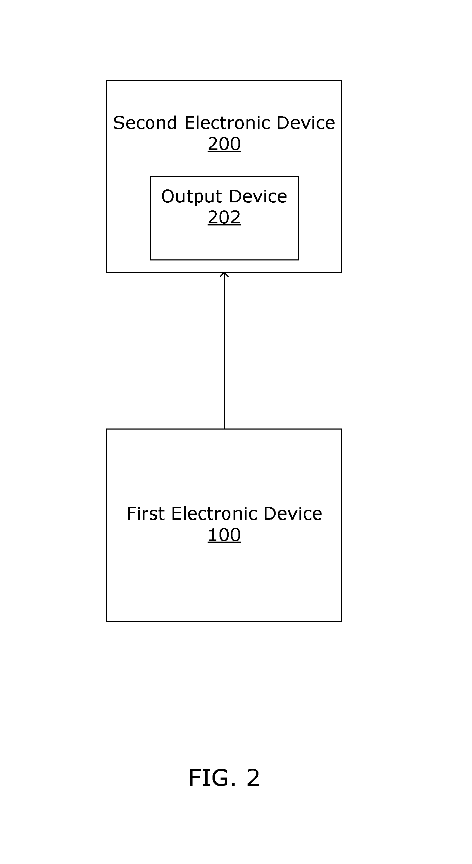

Referring to FIG. 2, a first electronic device, such as portable electronic device 100, electrically communicates with a second electronic device 200 having an output device 202. The second electronic device 200 may be a tablet computer, a television, an interactive billboard, an interactive display, a bank machine display, a vending machine display, a projector, a head-mounted display such as a virtual reality display or in-glasses display, for example, a heads-up display, which may be projected on a vehicle windshield or in a cockpit, or another output device, for example. Communication between the first electronic device 100 and the second electronic device 200 may be over the Internet or may be via short range communication.

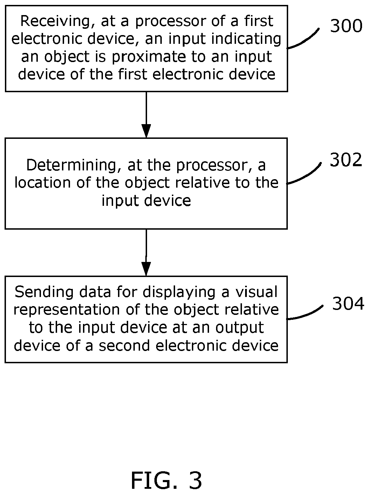

A flow chart illustrating a method is shown in FIG. 3. The steps of FIG. 3 may be carried out by routines or subroutines of software executed by, for example, the processor 102. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

The processor 102 of a first electronic device 100 receives 300 an input indicating an object is proximate to an input device 152 of the first electronic device 100. The processor 102 then determines 302 a location of the object relative to the input device 152 and sends 304 data for displaying a visual representation of the object relative to the input device 152 at an output device 202 of a second electronic device 200.

Prior to data being sent, an input may be received at the processor 102 in order to identify a proximate electronic device as the second electronic device. The input may be a selection by a user from a list of proximate electronic devices. Alternatively, the second electronic device may be automatically selected using location-based sensing to identify the nearest electronic device or a particular type of electronic device, for example. Location-based sensing may be performed based on Bluetooth™ connectivity range, GPS, WiFi, or cell triangulation, for example.

The visual representation may include an image of the input device including a visual indication of where the object is located relative to the input device. Alternatively, the visual representation may be a simplified image of the input device including only landmarks such as characters of a keyboard, for example.

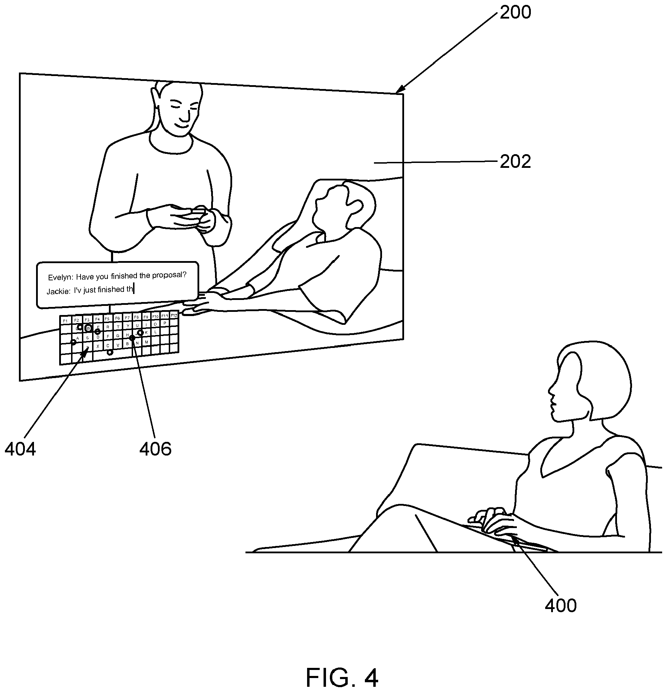

Continued reference is made to FIG. 3 with additional reference to FIG. 4 to describe one example of a method of facilitating input at the portable electronic device 100. In the present example, a processor 102 of a remote keyboard device 400 receives 300 multiple inputs indicating that objects, which are fingers of a user, are proximate to a keyboard of the remote keyboard device 400. The processor 102 determines 302 locations of the objects relative to the keyboard of the remote keyboard device 400. The processor 102 then sends 304 data for displaying a visual representation 402 of the objects relative to the keyboard at a display 202 of the second electronic device 200. As shown, the visual representation 404 is an image of the keyboard of the remote keyboard device 400 including circles 406 to indicate the location of the user's fingers relative to the keyboard.

The keyboard in the example of FIG. 4 may be a physical keyboard including sensors associated with keys of the keyboard. The sensors may be capacitive sensors or optical sensors, for example. The sensors may be replaced by a video feed of the keyboard including image tracking software used to determine finger location. The keys of the keyboard further include switches that send a data entry input to the processor 102 when a key is selected. Inputs may be received by the processor 102 when the distance between one or more fingers and the keyboard is below a threshold. When the one or more fingers are proximate to the keyboard they may also be in contact with the keyboard.

Alternatively, the keyboard in the example of FIG. 4 may be displayed on a touch-sensitive display of the remote keyboard device 400. In this example, the type of sensor used to detect finger proximity may differ from the touch-sensing technology of the touch-sensitive display 118. The touch-sensitive display, such as a capactive touch-sensitive display, may alternatively be capable of detecting a difference between a proximate object and an object that is in contact with the touch-sensitive display. Data entry inputs are sent to the processor 102 when a touch is detected at a key location. In general, a touch occurs when contact is made between objects and the touch-sensitive display 118.

The inputs indicating object proximity to the input device differ from data entry inputs at the input device. In the example of FIG. 4, the inputs are used by the second electronic device 200 to generate the visual representation 402 of the objects relative to the keyboard at a display 404. In contrast, the data entry inputs operate an application being executed by the second electronic device 200 or interact with the processor 102 to control the second electronic device 200. As shown in FIG. 4, the data entry inputs are input to a messaging application. The data entry inputs may also be used by the second electronic device 200 to generate the visual representation 402 of the objects relative to the keyboard at a display 404. As shown in FIG. 4, the smaller circles indicate object proximity and the larger circle indicates a data entry input.

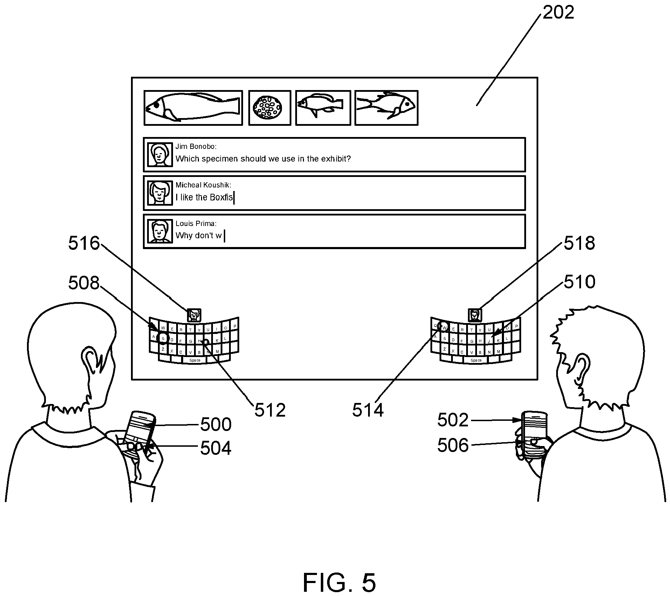

Continued reference is made to FIG. 3 with additional reference to FIG. 5 to describe another example of a method of facilitating input at the portable electronic device 100. In the present example, two remote keyboard devices communicate with a second electronic device 200. A first processor of a first remote keyboard device 500 receives 300 inputs indicating that objects, which are thumbs of a first user, are proximate to a keyboard 504 of the first remote keyboard device 500. A second processor of a second remote keyboard device 502 receives 300 an input indicating that an object, which is the left thumb of a second user, is proximate to a keyboard 506 of the second remote keyboard device 502. The first processor determines 302 locations of the objects relative to the keyboard 504 and the second processor 302 determines 302 a location of the object relative to the keyboard 506. The first processor then sends 304 data for displaying a visual representation 508 of the objects relative to the keyboard 504 at the display 404 of the second electronic device 200. Similarly, the second processor sends 304 data for displaying a visual representation 510 of the object relative to the keyboard 506 at the display 404 of the second electronic device 200. As shown, the visual representations 508, 510 are images of the respective keyboards 504, 506 including circles 512, 514 to indicate the location of the user thumbs relative thereto. The visual representations 508, 510 further include user identification icons 516, 518 to visually identify the keyboard 504, 506 with which the first and second users are associated.

Although circles have been shown to indicate object locations relative to the input device on the visual representation, other shapes and/or colours of object location indicators may be used. Alternatively, when the input device is a keyboard, the key of the keyboard that the object is proximate to may be highlighted or otherwise altered in appearance in order to indicate object location.

In one embodiment, the input device is a remote control device for a television, for example. In this embodiments, the user is able to control the output on the television screen while continuously viewing the television screen. In another embodiment, the input device is a control panel of an industrial apparatus. In this embodiment, the user is able to control the industrial apparatus while continuously viewing an output device of the industrial apparatus.

One or more benefits may be realized from implementation of one or more of the above embodiments. By providing a visual representation of the input device and the location of one or more objects relative thereto, the apparatus and method described herein allows the user to continuously view the output device of the second electronic device 200. Efficiency of user data entry may be improved because frequent gaze shifting between the output device of the second electronic device 200 and the input device of the first electronic device 100 is avoided. When the input device is part of a handheld device having a small keyboard, the improvement in data efficiency may be significant. In addition, user fatigue due to eye strain resulting from distance adjustment when looking back and forth between the two devices may be reduced.

The above-described embodiments are intended to be examples only. Alterations, modifications and variations can be effected to the particular embodiments by those of skill in the art without departing from the scope of the present application, which is defined solely by the claims appended hereto.

## Claims

1. A method comprising:
receiving, at a processor (102) of a first electronic device (100), an input indicating an object is proximate to an input device (152) of the first electronic device (100);
determining, at the processor (102), a location of the object relative to the input device (152); and
sending data for displaying a visual representation of the object relative to the input device (152) at an output device (202) of a second electronic device (200).

2. A method as claimed in claim 1, comprising receiving, at the processor (102), an input for identifying a proximate electronic device as the second electronic device (200) prior to data being sent.

3. A method as claimed in claim 2, wherein the input is a selection from a list of proximate electronic devices.

4. A method as claimed in any preceding claim, wherein the input is received from one of: a capacitive sensor, a resistive sensor and an optical sensor of the first electronic device (100).

5. A method as claimed in any preceding claim, wherein the input is received when the distance between the object and the input device (152) is below a threshold.

6. A method as claimed in any preceding claim, wherein the input device (152) is a keyboard (400).

7. A method as claimed in any preceding claim, wherein the input device (152) comprises one or more buttons.

8. A method as claimed in any preceding claim, wherein the input is received when the object is in contact with the input device (152).

9. A method as claimed in claim 6, wherein actuation of keys of the keyboard generates data for use as input to the second electronic device (200).

10. A method as claimed in claim 6, wherein the keyboard is a touch-sensitive keyboard and touches detected at keys of the touch-sensitive keyboard generate data for use as input to the second electronic device (200).

11. A method as claimed in any preceding claim, comprising sending data for displaying a visual representation (404) prior to the processor (102) receiving the input indicating an object is proximate to an input device (152) of the first electronic device (100).

12. A non-transient computer readable medium comprising instructions executable on a processor (102) of the electronic device for implementing the method of any preceding claim.

13. A first electronic device (100) comprising:
an input device (152);
a sensor for detecting an object proximate to the input device (152); and
a processor (102) in electrical communication with the input device (152) and the sensor, the processor (102) receiving an input indicating that an object is proximate to the input device (152) from the sensor, determining a location of the object relative to the input device (152) and sending data for displaying a visual representation (404) of the object relative to the input device (152) at an output device (202) of a second electronic device (200).

14. A first electronic device (100) as claimed in claim 13, wherein the input device (152) is a keyboard (400) or a touch-sensitive device.

15. A first electronic device (100) as claimed in claim 13 or 14, wherein the sensor is one of: a capacitive sensor and an optical sensor of the first electronic device (100).
